# NEUE EUROPÄISCHE PATENTSCHRIFT

(11) **EP 0 520 086 B2**
(45) Veröffentlichungstag und Bekanntmachung des Hinweises auf die Entscheidung über den Einspruch: **30.06.1999**
(45) Hinweis auf die Patenterteilung: 17.07.1996
(21) Anmeldenummer: 91118158.4
(22) Anmeldetag: 24.10.1991
(51) Int. Cl.: C10B 53/00

(54) **Verfahren zur Nutzbarmachung von Entsorgungsgütern aller Art**
Process for the valorisation of all kinds of waste
Procédé de valorisation de toutes sortes de déchets

(30) Priorität: 18.06.1991 DE 4120061; 10.09.1991 DE 4130416
(43) Veröffentlichungstag der Anmeldung: 30.12.1992
(60) Teilanmeldung: 95103427.1
(73) Patentinhaber: THERMOSELECT AKTIENGESELLSCHAFT, FL-9490 Vaduz (LI)
(72) Erfinder: Kiss, Günter H., MC-98004 Monaco (MC)
(74) Vertreter: Pfenning, Meinig & Partner

(56) Entgegenhaltungen:
- EP-A- 0 443 596
- WO-A-81/03629
- WO-A-87/01792
- DE-A- 1 751 974
- DE-A- 3 207 203
- GB-A- 1 452 037
- US-A- 3 812 620

## Beschreibung

Die Erfindung bezieht sich auf ein Verfahren zur Nutzbarmachung von Entsorgungsgütern aller Art bei dem unsortierte, unbehandelte beliebige Schadstoffe in fester und/oder flüssiger Form enthaltender Industrie- Haus- und Sondermüll, sowie Industriegüterwracks einer Hochtemperaturbeaufschlagung unterzogen werden, nach dem Oberbegriff des Patentanspruches 1.

Die Erfindung betrifft auch ein Verfahren, bei dem die Hochtemperaturbeaufschlagung zu einer schmelzflüssigen Form, die entsprechend ausgetragen werden kann, führt.

Die bekannten Verfahren der Abfallentsorgung bilden keine befriedigende Lösung der wachsenden Müllprobleme, sie sind ein wesentlicher Faktor der Umweltzerstörung.

Industriegüterwracks aus Verbundwerkstoffen, wie Kraftfahrzeuge und Haushaltsgeräte, aber auch Öle, Batterien, Lacke, Farben, toxische Schlämme, Medikamente und Krankenhausabfälle unterliegen gesonderten, gesetzlich streng vorgeschriebenen Entsorgungsmaßnahmen. Hausmüll hingegen ist ein unkontrolliertes heterogenes Gemisch, das nahezu alle Arten von Sondermüllfraktionen und organischen Bestandteilen enthalten kann, dessen Entsorgung in keinem Verhältnis zu seiner Umweltbelastung steht.

In Deponien wird Hausmüll mangelhaft gelagert, Faulgase und Kohlendioxid entweichen unkontrolliert in die Atmosphäre, schadstoffhaltige Flüssigkeiten und Eluate der deponierten Abfälle verseuchen das Grundwasser.

Um die zu behandelnde Müllmenge zu reduzieren, ist bereits vorgeschlagen worden, die organischen Bestandteile aus Hausmüll und Klärschlämmen zu kompostieren. Dabei bleibt unbeachtet, daß diese Organika heterogen sind und eine Vielzahl nicht abbaubarer toxischer Bestandteile wie Chemikalien, Arzneimittel- und Schwermetallrückstände enthalten, die im Kompost verbleiben und über Pflanzen und Tiere in den biologischen Kreislauf zurückgeführt werden.

Durch Recycling sogenannter Wertstoffe versucht man ebenfalls, die Müllmenge zu verringern. Unbeachtet hierbei bleiben die hohen Aufwendungen zum getrennten Sammeln und Aufbereiten dieser Abfälle; mit wiederholtem Recycling wachsen Kosten und Umweltbelastung bei reduzierter Verwertbarkeit der gewonnenen Produkte.

Abfallbeseitigungsverfahren gehen aus von der klassischen offenen Müllverbrennung in sogenannten Rostöfen, wobei teilweise versucht wird, die Verbrennungsrückständ, d.h. die unbrennbaren festen Reste und Schwermetalle in umweltverträgliche Form zu überführen (vgl. "Müll und Abfall", Ausg. 2/89, Seiten 64 bis 70). Hierzu bedient man sich eine Hochtemperatur-Einschmelzverfahrens, bei dem bei Temperaturen von ca. 1 300°C alle mineralischen Anteile der festen Reststoffe der Verbrennungsrückstände in ihren schmelzflüssigen Zustand überführt werden. In dieses Schmelzbad wird auch die in der Anlage anfallende Flugasche eingebracht, woraufhin die Schmelze in ein Wasserbad granuliert wird. Die dabei entstehende feingranulierte verglaste Schlacke zeigt zunächst hinsichtlich ihrer Deponiefähigkeit äußert geringe Wasserlöslichkeit der in ihr eingeschlossenen Salze, Schwermetalle bzw. der Metallionen der toxischen Komponenten. Die Langzeit-Eluatbeständigkeit von in verglaster Schlacke eingeschlossenen toxischen Stoffen ist jedoch problematisch.

Bei den bekannten Müllverbrennungsanlagen durchlaufen die Entsorgungsgüter ein breites Temperaturfeld, wobei ein großer Anteil der mineralischen und metallischen Reststoffe nicht aufgeschmolzen wird. Die den verbleibenden Feststoffen innewohnende Energie wirdnicht genutzt. Die kurze Verweilzeit des Mülls bei höheren Temperaturen und die hohe Staubentwicklung durch Einblasen großer Mengen stickstoffreicher Verbrennungsluft in die unverdichteten Entsorgungsgüter begünstigen die gefährliche Bildung von chlorierten Kohlenwasserstoffen. Man ist deshalb dazu übergegangen, die Abgase von Müllverbrennungsanlagen einer Nachverbrennung bei höheren Temperaturen zu unterziehen. Um die hohen Investitionen solcher Anlagen zu rechtfertigen, werden die abrasiven und korrosiven heißen Abgase mit ihren hohen Staubanteilen durch Wärmetauscher geleitet. Bei der relativ langen Verweilzeit im Wärmetauscher bilden sich erneut chlorierte Kohlenwasserstoffe durch De-Novo-Syynthese, die sich mit den mitgeführten Stäuben verbinden und zu hochtoxischen Filtraten führen. Folgeschäden und die Kosten ihrer Beseitigung sind letztlich abschätzbar.

Trotz des hohen technischen Aufwandes beim bekannten Stand der Technik verbleiben nach der Verbrennung ca. 40% des zu entsorgenden Mülls in Form von Asche, Schlacken und hochtoxischen Filtraten, die in ihrer Gefährlichkeit mit radioaktiven Abfällen zu vergleichen sind und kostenintensiv entsorgt werden müssen. Um das zu deponierende Volumen zu reduzieren, ist es an sich bekannt, die metallischen Bestandteile der Reststoffe abzutrennen und einer gesonderten Verwertung zuzuführen. Die verbleibenden Aschen und Schlacken werden mit hohem Energieaufwand einem Hochtemperaturschmelzprozeß unterzogen. Die Schlacke ist, bedingt durch die aufzuschmelzenden heterogenen Ausgangsstoffe, inhomogen und enthält noch erhebliche Anteile organischer Reststoffpartikel, die von der flüssigen Schmelze umschlossen, nicht oxidiert werden.

Durch schockartiges Abkühlen der Schmelze im Wasserbad entsteht ein heterogenes Schmelzgranulat, das an seinen thermischen Bruchstellen unkontrolliert zersplittert, so daß eingeschlossene Schadstoffe wieder eluierfähig werden. Ein hoher Energieaufwand von bisher ca. 200 Liter Heizöl pro Tonne Schmelze verbleibt ungenutzt, weil das so gewonnene Schmelzgranulat nur als Füllstoff im Straßenbau od. dgl. eingesetzt werden kann.

Schlacke die in der Vergangenheit im Straßenbau, beim Bau von Sportanlagen oder Parkplätzen eingesetzt worden ist, hat insbesondere nach jüngsten wissenschaftlichen Erkenntnissen zu schweren Problemen hinsichtlich der Umweltbelastung, aber auch der Schädigung der Gesundheit von Mensch, Pflanze und Tier geführt. Die im Langzeitverhalten freiwerdenden Schwermetalle, aber auch hochtoxischen Gifte wie Dioxine und Furane zwangen zum Abriß solcher Anlagen in nicht wenigen Einzelfällen und damit zu sehr erheblichen Folgekosten der an sich schon durch hohen Fremd-Energieeinsatz gewonnenen bisherigen End- produkte der Abfallentsorgung.

Die in das Grundwasser und letztlich auch in die Nahrungskette der Lebensmittel langfristig geratenden Schadstoffe potenzieren die latente Problematik um ein Mehrfaches.

Die bisher benutzten Pyrolyseverfahren in konventionellen Reaktoren haben ein der Müllverbrennung ähnlich breites Temperaturspektrum. In der Vergasungszone herrschen hohe Temperaturen. Die sich bildenden heißen Gase werden zur Vorwärmung des noch nicht pyrolysierten Entsorgungsgutes genutzt, kühlen hierbei ab und durchlaufen den für die Bildung chlorierter Kohlenwasserstoffe relevanten und damit gefährlichen Temperaturbereich.

Alle bekannten Pyrolyseverfahren von unsortiert zugeführten, nicht gebundenen und entwässerten Entsorgungsgütern ergeben keine hinreichend gasdurchlässige Bettschüttung, benötigen einen zu hohen Energieaufwand bei ungenügender Gasgewinnung und langer Verweilzeit im Reaktor. Aufgrund der thermischen Strömung und des inneren Gasdruckes kommt es zu hohen, große Filterkapazitäten erfordernden Staubbildungen. Soll Wassergas erzeugt werden, so muß in der Vergasungszone separat hergestellter Heißdampf, also Fremddampf, zugegeben werden. Die verbleibenden Feststoffe werden in der Regel nicht aufgeschmolzen, sondern müssen einer getrennten Entsorgung zugeführt werden und sind deshalb mit denen einer konventionellen Müllverbrennungsanlage vergleichbar.

Um ein ökologisch bedenkenlos nutzbares Reingas herzustellen, durchlaufen Pyrolysegase im Regelfall vor der Reinigung einen Cracker. Darüber hinaus ist es bekannt, durch Einsatz eines Wärmetauschers die den heißen Gase innewohnende Wärmeenergie zu nutzen, Hierbei entstehen durch die Verweilzeit der Gase im Wärmetauscher chlorierte Kohlenwasserstoffe, die bei der thermischen Nutzung des gewonnenen Gases freigesetzt werden.

Beim Einsatz von Schachtöfen zur Müllverbrennung ergibt sich u.a. der erhebliche Nachteil des Verklebens und der Brückenbildung der zu pyrolysierenden Entsorgungsgüter im Ofen, so daß solche Reaktoren mit mechanischen Hilfsmitteln wie Stocherstangen, Vibratoren und dergleichen auszurüsten sind, ohne daß hierdurch bisher das Problem befriedigend gelöst werden konnte.

Drehrohr- und Wirbelschichtvergaser führen darüber hinaus aufgrund des mechanischen Abriebs an den Ofenwandungen durch die teilweise scharfkantigen Entsorgungsgüter zu langen Stillstandszeiten, extrem hoher Staubbildung und benötigen technisch aufwendige gasdichte Schleusen. Es ergeben sich erhebliche Wartungsarbeiten mit entsprechend hohen Kosten.

Um die Nachteile der geschilderten Müllverbrennungs- und Pyrolyseverfahren zu vermeiden, ist es auch bereits bekannt, Abfälle und Giftstoffe über einem mineralischen oder metallischen Hochtemperatur-Schmelzbad zu zersetzen oder die Abfälle in ein solches Schmelzbad einzugeben, um auf diese Weise eine schnelle pyrolytische Zersetzung der Entsorgungsgüter bei hohen Temperaturen zu gewährleisten. Der wesentliche Nachteil einer solchen Verfahrensweise ist insbesondere darin zu sehen, daß eine Verwertung von flüssigen und/oder feuchten Abfällen aufgrund der explosionsartigen Verpuffungsgefahr ausscheidet, und daß aufgrund der entstehenden hohen Drücke die sich bildenden Gase keine genügend lange Verweilzeit in der Schmelze erreichen, um organische Schadstoffe sicher zu zerstören. Auch bei getrockneten unentgasten organischen Abfällen ist der Gasdruck durch die sich zersetzende Organika so hoch, daß keine ausreichend lange Verweilzeit gegeben ist. Die Schmelzprodukte sind nach kurzer Zeit mit nicht oxidierbaren, von Schmelz flüssigkeit umhüllten Kohlenstoffpartikeln gesättigt, so daß ein weiteres Zuführen von Entsorgungsgütern nicht sinnvoll ist.

Bei einem weiteren bekannten thermischen Verfahren zur Müllentsorgung werden zunächst mineralische und metallische von organischen Bestandteilen getrennt, die separierten Organika getrocknet und anschließend pulverisiert. Das gewonnene Pulver wird in ein Hochtemperatur-Schmelzbad oder einen Verbrennungsraum mit geeigneter Temperatur eingeführt und durch Einblasen von Sauerstoff oder mit Sauerstoff angereicherter Luft sofort zersetzt und dabei die Schadstoffe zerstört.

Dieses Verfahren führt zwar vom ökologischen Standpunkt her gesehen zu befriedigenden Ergebnissen, hat aber dennoch erhebliche Nachteile. So können beispielsweise keine flüssigen Abfälle und Entsorgungsgüter in Verbundstrukturen entsorgt werden. Auch sind die hierbei entstehenden Kosten nicht zu vertreten.

Aus der WO 81/03629 ist schließlich noch ein Verfahren der gattungsgemäßen Art bekannt, bei dem Müll unsortiert in einen Kanal hinein verdichtet wird, aber während des Preßvorganges die in dem Abfallstoff enthaltene Flüssigkeit entfernt bzw. ausgedrückt wird. Der nur anfangs verdichtete Abfall am Kanalbeginn wird später im Kanal druckfrei. Die Abfallstoffe sind in dem beheizten Teil des Kanals nur im Bodenbereich in Kontakt mit den Wänden des beheitzen Kanals. Durch Ausweitung des Kanalquerschnitts wird auch noch der Formschluß zur Bodenwandung aufgehoben, und zwar in dem wesentlichen Abschnitt des Kanals, in dem der Abfall pyrolysiert wird. Die im Abfallstoff gegebenenfalls enthaltenen organischen Bestandteile sollen hierbei im Pyrolyseteil des Kanals vollständig verkokt werden. Das Pyrolyseprodukt erreicht nach dem Verlassen des Kanals eine Hochofenstufe, wobei die Organika in dem sich erweiternden beheizten Teil des Kanals vollständig in Kohlenstoff überführt sind.

Ein weiteres Pyrolyseverfahren ist aus der EP 0 443 596 A1 bekannt. Bei diesem Verfahren findet zuerst eine Pyrolyse und dann eine Hochtemperaturbeaufschlagungstatt.

Gemeinsam weisen die vorbeschriebenen Verbrennungs- und Pyrolyseverfahren den Nachteil auf, daß sich die bei der Verbrennung oder pyrolytischen Zersetzung verdampften Flüssigkeiten oder Feststoffe mit den Verbrennungs- oder Pyrolysegasen vermischen und abgeleitet werden, bevor sie die zur Zerstörung aller Schadstoffe notwendige Temperatur und Verweilzeit im Reaktor erreicht haben. Das verdampfte Wasser ist nicht zur Wassergasbildung nutzbar gemacht. Deshalb werden im Regelfall bei Müllverbrennungsanlagen Nachverbrennungskammern, bei Pyrolyseanlagen Crackerstufen nachgeschaltet.

Mit der vorliegenden Erfindung soll ein Verfahren der eingangs genannten Art vorgeschlagen werden, das, bei beliebigem Ausgangsmaterial an Entsorgungsgütern in sich geschlossen, die vorgenannten Nachteile beseitigt, so daß keinerlei Umweltbelastung auftreten kann, bei Minimierung des hierfür erforderlichen technischen Aufwandes und der Verfahrenskosten.

Die Lösung dieser Aufgabe wird erfindungsgemäß durch die im Kennzeichen des Anspruchs 1 angegebenen Merkmale erreicht.

Vorteilhafte Ausgestaltungen und Weiterbildungen dieses Verfahrens ergeben sich aus den übrigen Ansprüchen.

Dadurch, daß Industriegüterwracks, wie Kühlschränke, Waschmaschinen, Elektro- und Elektronikgeräte, unzerteilt, Kraftfahrzeuge in großstückige Portionen zerlegt, unter Beibehaltung ihrer Misch- und Verbundstruktur zusammen mit unsortiertem und unvorbehandeltem Schüttmüll und flüssigen Abfällen chargenweise so komprimiert werden, daß das Hohlraumvolumen minimiert ist, gehen die festen Bestandteile der Entsorgungsgüter einen hohen mechanischen Verbund ein, und die vorhandenen überschüssigen Flüssigkeiten werden zusammen mit den entstehenden Kompaktpaketen mit in einen von außen beheitzen länglichen Kanal gepreßt, wobei sich ein gasdichter Pfropfen vor dem Kanaleingang bildet, der Schleusenfunktion wegen seiner Gasundurchlässigkeit übernimmt. Die Flüssigkeiten müssen keiner gesonderten Entsorgung unterzogen werden, und thermisch ansonsten isolierende Luft muß nicht in den bekannten großen Volumina miternitzt werden. Die Wärmeleitfähigkeit im durch Komprimieren gewonnenen Kompaktpaket wird durch metallische und mineralische Inhaltstoffe und hohe Dichte signifikant verbessert. Es werden hohe Entsorgungsleistungen auch bei kleiner Anlagenauslegung erreicht, ohne daß kostenintensive Vorbehandlungsverfahren, wie getrenntes Sammeln und technisch aufwendiges Aufbereiten, Shreddern, Trennen, Trocknen und Brikettieren, erforderlich sind.

Für den Verfahrensablauf ist es weiter kennzeichnend, daß die vorliegenden Kompaktpakete unter Aufrechterhaltung der Druckbeaufschlagung formschlüssig in einen auf über 100°C beheizten Kanal eingepreßt werden, wobei sie bei sich aufbauendem Gasdruck nur so lange in kraftschlüssigem Kontakt mit den Kanalwandungen gehalten werden, bis die mitgeführten Flüssigkeiten und leicht flüchtigen Stoffe verdampft und vorhandene Rückstellkräfte einzelner Komponenten aufgehoben sind und bis die mitgeführten organischen Bestandteile zumindest teilweise Bindemittelfunktion übernommen haben. Eine pyrolytische Zersetzung der organischen Bestandteile im Kanal muß beim vorliegenden Verfahren nicht erfolgen, wobei eine Teilzersetzung durchaus wünschenswert sein kann. Es genügt jedoch die Bindung aller Feinanteile und die Erzeugung form- und strukturstabiler, stückiger Konglomerate. Beim vorliegenden erfindungsgemäßen Verfahrensablauf entsteht nach kurzer Verweilzeit des Entsorgungsguts im beheizten Kanal ein kompakter Formsrang, in dem die mit dem Entsorgungsgut eingebrachten Feinanteile und Stäube gebunden werden, da durch ausreichend schnelle Gasentwicklung in den Randbereichen des Stranges mit erhöhtem Druck eine rasche Durchwärmung des Entsorgungsgutes sichergestellt wird und zumindest Komponenten organischer Bestandteile so plastifiziert werden, daß das Rückstellvermögen dieser Müllbestandteile aufgehoben wird. Entsprechend wird eine günstige Reaktionstemperatur über 100°C vorgegeben. Bei kraftschlüssigem Kontakt mit den Wandungen durchströmen die an der heißen Kanalwand und weiter innen sich bildenden Gase die Entsorgungsgüter-Pakete in Prozeßrichtung. Die Entsorgungsgüter verkleben, versintern und verbinden sich hierbei untereinander und geben ihre Feuchtigkeit ab, so daß staubfreie, form- und strukturstabile, brockige Konglomerate bis hin zum Austrittsende des Kanals entstehen. Diese brockig am Kanalende austretenden, in den Schacht eines Hochtemperaturvergasers hineinfallenden Feststoffkonglomerate bilden die Voraussetzung für eine gasdurchlässige, staubfreie Bettschüttung in dem nachgeschalteten Hochtemperaturreaktor und eine hier erfolgende vollständige Hochtemperaturvergasung.

Die thermisch vorbehandelten Kompaktpakete werden erfindungsgemäß unmittelbar mit dem Austritt aus dem beheizten Kanal drucklos und vergleichbar mit Briketts in den Hochtemperaturvergaser gegeben. Der Hochtemperaturreaktor kennzeichnet sich dadurch, daß er über die Gesamtheit seines Volumens auf wenigstens 1000°c gehalten wird. Hierdurch werden schlagartig zumindest die Oberflächen der eintretenden Kompaktpakete bzw. von diesen abfallende, getrennte Brocken bezüglich ihrer organischen Bestandteile verkohlt. Die brikettierten Brocken formieren mit der ihr innewohnenden Energie in dem Hochtemperaturvergaser ein loses gasdurchlässiges Schüttbett.

Die Bildung explosiver Gasgemische ist im gesamten System durch die thermische Vorbehandlung im Kanal ausgeschlossen. Die Gesamtheit der gasförmigen und festen Entsorgungsgüter bleibt so lange einer Hochtemperaturbeaufschlagung unterworfen, bis alle thermisch reagierbaren Schadstoffe sicher zerstört sind. Dadurch, daß die organischen Bestandteile der Feststoffbrocken mindestens in den Außenbereichen bei Eintritt in den Hochtemperaturreaktor sofort pyrolytisch zersezt werden, wird ein Verkleben der Schüttsäule, sowie Brückenbildung und Ankleben an den Reaktorwänden vermieden. Über der Schüttung bildet sich erfindungsgemäß ein kohlenstoffhaltiges Fließbett aus, durch das der Wasserdampf der mit der Kompaktierung mitgeführten Flüssigkeit des Ausgangsmaterials hindurchdringt, der im beheizten Kanal entsteht. Hierdurch wird vorteilhaft der Ablauf einer Wassergasreaktion gewährleistet, ohne daß Fremddampf benötigt wird. Die gasdurchlässige Schüttung bildet die Voraussetzungen für den gleichzeitigen Ablauf der bekannten Boudouard-Reaktion. Kohlendioxid, das beim Vergasen des Kohlenstoffs mit Sauerstoff entsteht, wird beim Durchdringen der Schüttsäule in Kohlenmonoxid transformiert.

Da der Hochtemperaturreaktor auch über dem Fließbett eine Temperatur von mindestens 1000°C aufweist, durch den alle Gase mit ausreichend langer Verweilzeit geleitet werden, ist gewährleistet, daß chlorierte Kohlenwasserstoffe sicher zerstört und langkettige Kohlenwasserstoffe gecrackt werden. Die Bildung von Kondensaten, wie Teere und Öle, wird zuverlässig verhindert.

Das mindestens 1000°C heiße Synthesegasgemisch wird unmittelbar nach Verlassen des Hochtemperaturreaktors schockartig auf 100°C abgekühlt und entstaubt, so daß die Neubildung von chlorierten Kohlenwasserstoffen ausgeschlossen werden kann.

Das Aufschmelzen der Feststoffbrocken mit der Hochtemperaturbeaufschlagung innerhalb des Reaktors erfolgt vorzugsweise bei Temperaturen bis zu 2000°C oder mehr Diese Temperaturen entstehen bei der Kohlenstoffvergasung unter Zugabe von Sauerstoff.

In der Schmelzzone des Hochtemperaturreaktors unterhalb der Festbettschüttung werden die anorganischen Bestandteile, d.h. alle Gläser, Metalle und sonstigen Minerale, aufgeschmolzen. Ein Teil der in den Feststoffen enthaltenen Schwermetalle fällt bei der dosierten Sauerstoffzugabe in der reduzierenden Atmosphäre in elementarer Form an und bildet Legierungen mit anderen Komponenten der Schmelze. Die schmelzflüssige Form wird ausgetragen und gegebenenfalls fraktioniert.

In einer Ausführungsform der Erfindung werden bei Temperaturen von über 2000°C die bei der Kohlenstoffvergasung mit Sauerstoff entstehenden metallischen und mineralischen Bestandteile aufgeschmolzen und die dann vorliegenden flüssigen Formen gegebenenfalls bekannten Trennverfahren unterworfen und fraktioniert abgezogen.

Bevorzugt wird auch die nach der Hochtemperaturvergasung verbleibende, vorwiegend mineralische Hochtemperaturschmelze so lange in oxidierender Atmosphäre in flüssiger Phase belassen, bis eine vollständig geläuterte, blasenfreie und homogene, in ihrer Zusammensetzung naturproduktähnliche Schmelze vorliegt.

Eine weitere Ausfuhrungsform der Erfindung ist, dadurch gekennzeichnet, daß aus der homogenisierten Hochtemperatur-Schmelze unter Nutzung wenigstens eines erheblichen Teils der ihr innewohnenden Energie hochwertige Industrieprodukte durch Gieß-, Spinn-, Verform- bzw. Ausform- und/oder Blähverfahren hergestellt werden.

Nach dem vorstehend beschriebenen Verfahren ist erstmalig eine universelle Entsorung in umfassender Form möglich, bei der auf getrenntes Sammeln und Aufbereiten wie Shreddern, Trennen, Trocknen und Brikettieren sowie auf Recycling von sogenannten Werkstoffen aller Art verzichtet wird. Die mitgeführten Flüssigkeiten werden energetisch durch Wasser-Gas-Reaktion genutzt, die Gesamtheit der gasförmigen, flüssigen und festen Entsorgungsprodukte werden solange in einem Hochtemperaturreaktor auf einer Mindesttemperatur von über 1000°C gehalten, bis alle Schadstoffe thermisch zerstört sind. Die Rückbildung von chlorierten Kohlenwasserstoffen wird durch schockartiges Kühlen der Gase gänzlich ausgeschlossen und verbleibende, in flüssiger Form ausgetragene Reststoffe werden gegebenenfalls nach Abtrennung von Metallfraktionen unter Nutzung der ihnen innewohnenden Energie zu hochwertigen Industrieprodukten weiterverarbeitet.

## Patentansprüche

1. Verfahren zur Nutzbarmachung von Entsorgungsgütern aller Art, bei dem unsortierter, unbehandelter, beliebige Schadstoffe in fester und/oder flüssiger Form enthaltender Industrie-, Haus-und/oder Sondermüll sowie Industriegüterwracks einer Hochtemperaturbeaufschlagung und thermischen Trennung bzw. Stoffwandlung unterzogen werden und bei maximaler energetischer Nutzung die anfallenden festen Rückstände in eine Hochtemperaturschmelze überführt werden,
**dadurch gekennzeichnet,**
daß das unzerkleinerte, gegebenenfalls großstückig zerteilte Entsorgungsgut unter Mitführung vorhandener Flüssigkeitsanteile sowie Beibehaltung seiner Misch- und Verbundstruktur chargenweise zu Kompaktpaketen komprimiert und unter Aufrechterhaltung der Druckbeaufschlagung formschlüssig in einen auf über 100 °C beheizten Kanal eingebracht wird,
daß das Kompaktgut so lange schiebend in kraftschlüssigem Kontakt mit den Wandungen des Kanals gehalten wird, bis die anfangs vorhandenen Flüssigkeiten verdampft und innewohnende mechanische Rückstellkräfte einzelner Entsorgungsgut-Komponenten aufgehoben sind und bis die mitgeführten organischen Bestandteile zumindest teilweise Bindemittelfunktionen übernommen haben,
und daß das aus dem Kanal in diesem Zustand form- bzw. strukturstabil ausgedrückte brockige Feststoffkonglomerat in einen über sein gesamtes Volumen auf wenigstens 1000 °C gehaltenen Hochtemperaturreaktor eingebracht und
daß aus den Feststoffbrocken innerhalb des Hochtemperaturreaktors eine gasdurchlässige Schüttung bis zur Höhe der Eintrittsöffnung des beheizten Kanals gebildet und aufrechterhalten wird, wobei die Niveauhöhe der Festbettschüttung konstant gehalten wird, so daß sich unmittelbar nach dem Verlassen des beheizten Kanals die organischen Bestandteile der Feststoffbrocken mindestens in den Außenbereichen sofort pyrolytisch zersetzen, und
daß der aus den mitgeführten Flüsigkeitsanteilen der Entsorgungsgüter bei der thermischen Behandlung im beheizten Kanal entstehende, mit erhöhtem Druck aus dem Kanal austretende Wasserdampf über die Oberfläche der Schüttung durch das dort aus den thermisch zersetzten und verkohlten Randbereichen der Kohlenstoffbrocken sich ableitende kohlenstoffhaltige Fließbett geleitet wird (Wassergasreaktion).

2. Verfahren nach Anspruch 1, dadurch gekennzeichnet, daß mit der chargenweisen Kompaktierung des Entsorgungsgutes eine Minimierung des ursprünglich vorhandenen Hohlraumvolumens vorgenommen wird und ein mechanisch kraft- und formschlüssiger Verbund der festen Bestandteile erfolgt.

3. Verfahren nach Anspruch 1, dadurch gekennzeichnet, daß das strukturstabil verfestigte, brockig aus dem beheizten Kanal austretende getrocknete und von leicht flüchtigen Bestandteilen befreite Feststoffkonglomerat unmittelbar und direkt in den Hochtemperaturreaktor eingebracht wird.

4. Verfahren nach Ansprüchen 1 bis 3, dadurch gekennzeichnet, daß die Kohlenstoffanteile in der Festbettschüttung durch dosierte Zugabe von Sauerstoff zu Kohlendioxid vergast werden, so daß das Kohlendioxid beim Durchdringen der kohlenstoffhaltigen Feststoffschüttung in Kohlenmonoxid umgewandelt wird (Boudouard-Reaktion).

5. Verfahren nach Ansprüchen 1 bis 4, dadurch gekennzeichnet, daß in einer mindestens 1000 °C heißen Beruhigungszone über dem Fließbett alle chlorierten Kohlenwasserstoffverbindungen (Dioxine und Furane) zerstört und langkettige, bei der thermischen Zersetzung organischer Bestandteile entstehende Kohlenwasserstoffverbindungen bei Verhinderung der Bildung von Kondensaten, wie Teeren und Ölen, gecrackt werden.

6. Verfahren nach Ansprüchen 1 bis 5, dadurch gekennzeichnet, daß das mindestens 1000 °C heiße schadstoffbeladene Synthesegasgemisch unmittelbar nach Verlassen des Hochtemperaturreaktors einer (eine De-Novo-Synthese von Dioxin und Furan ausschließenden) schockartigen Wasserbeaufschlagung bis zur Abkühlung unter 100 °C unterworfen und entstaubt wird.

7. Verfahren nach Ansprüchen 1 bis 6, dadurch gekennzeichnet, daß bei Temperaturen von über 2000 °C die bei der Kohlenstoffvergasung mit Sauerstoff entstehenden metallischen und mineralischen Bestandteile aufgeschmolzen werden und daß die dann vorliegenden flüssigen Formen gegebenenfalls bekannten Trennverfahren unterworfen und fraktioniert abgezogen werden.

8. Verfahren nach Ansprüchen 1 bis 7, dadurch gekennzeichnet, daß die nach der Hochtemperaturvergasung verbleibende, vorwiegend mineralische Hochtemperaturschmelze so lange in oxidierender Atmosphäre in flüssiger Phase belassen wird, bis eine vollständig geläuterte, blasenfreie und homogene, in ihrer Zusammensetzung naturproduktähnliche Schmelze vorliegt.

9. Verfahren nach Ansprüchen 1 bis 8, dadurch gekennzeichnet, daß aus der homogenisierten Hochtemperatur-Schmelze unter Nutzung wenigstens eines erheblichen Teils der ihr innewohnenden Energie hochwertige Industrieprodukte durch Gieß-, Spinn-, Verform- bzw. Ausform- und/oder Blähverfahren hergestellt werden.

10. Verfahren nach Ansprüchen 1 bis 9, dadurch gekennzeichnet, daß das gewonnene Synthesegas zur Beheizung des Kanals und des Hochtemperaturreaktors, zur Läuterung der Schmelze und zum Betreiben einer Sauerstoffanlage durch Gasmotoren bzw. -turbinen genutzt wird.

## Claims

1. Method for rendering usable disposal products of all kinds, in which unsorted, untreated industrial, domestic and/or special refuse and industrial product scrap containing any harmful substances in solid and/or liquid form are subjected to the application of high temperature and thermal separation or material transformation and, with a maximum utilization of energy, the solid residues which occur are converted into a high-temperature melt; characterized in that the disposal product which is non-comminuted and, where appropriate, is divided into large pieces, is compressed in batches to form compact parcels, with existing liquid fractions being carried with it and with its mixed and composite structure being preserved, and, with the application of pressure being maintained, is introduced positively into a conduit heated to more than 100°C; in that the compact product is kept in sliding non-positive contact with the walls of the conduit until the liquids initially present are evaporated and inherent mechanical restoring forces of individual components of the disposal product are eliminated, and until the organic constituents carried along have at least partially performed binder functions; and in that the lumpy solid conglomerate forced out of the conduit in this state in a dimensionally or structurally stable manner is introduced into a high-temperature reactor maintained at at least 1000°C over its entire volume and in that a gas-permeable heap up to the height of the inlet orifice of the heated conduit is formed from the solid lumps and maintained within the high-temperature reactor, where the level height of the fixed-bed heap is kept constant, so that, immediately after leaving the heated conduit, the organic constituents of the solid lumps immediately decompose pyrolytically at least in the outer regions, and in that the water vapour arising from the liquid fractions carried along in the disposal products during thermal treatment in the heated conduit and emerging at increased pressure from the conduit is guided over the surface;.of the heap through the carbon-containing fluidized bed derived there from the thermally decomposed and charred edge regions of the carbon lumps (water gas reaction).

2. Method according to Claim 1, characterized in that, as a result of the compacting of the disposal products in batches, a minimization of the originally existing void volume is carried out and a mechanically non-positive and positive bonding of the solid constituents takes place.

3. Method according to Claim 1, characterized in that the structurally stably consolidated, dried solid conglomerate emerging in lumpy form from the heated conduit and freed of readily volatile constituents is introduced immediately and directly into the high-temperature reactor.

4. Method according to Claims 1 to 3, characterized in that the carbon fractions in the fixed-bed heap are gasified to carbon dioxide by the metered addition of oxygen, so that the carbon dioxide, when it passes through the carbon-containing solid heap, is converted into carbon monoxide (Boudouard reaction).

5. Method according to Claims 1 to 4, characterized in that in a calming zone, at a temperature of at least 1000°C, above the fluidized bed, all the chlorinated hydrocarbon compounds (dioxins and furans) are destroyed and long-chain hydrocarbon compounds occurring during the thermal decomposition of organic constituents are cracked, whilst the formation of condensates, such as tars and oils, is prevented.

6. Method according to Claims 1 to 5, characterized in that the synthetic gas mixture having a temperature of at least 1000°C and laden with harmful substances, immediately after leaving the high-temperature reactor, is subjected to a shock-like application of water (excluding a DeNovo synthesis of dioxin and furan), until it cools to below 100°C, and is dedusted.

7. Method according to Claims 1 to 6, characterized in that, at temperatures of above 2000°C, the metallic and mineral constituents occurring during the gasification of the carbon with oxygen are melted down, and in that the liquid forms then present are, where appropriate, subjected to known separation methods and are drawn off in a fractionated manner.

8. Method according to Claims 1 to 7, characterized in that the predominantly mineral high-temperature melt remaining after the high-temperature gasification is left in the liquid phase in an oxidizing atmosphere until a completely clarified, bubble-free and homogeneous melt similar in composition to a natural product is obtained.

9. Method according to Claims 1 to 8, characterized in that high-grade industrial products are produced by casting, spinning, forming or shaping and/or expanding methods from the homogenized high-temperature melt by utilizing at least a considerable part of the energy inherent in the latter.

10. Method according to Claims 1 to 9, characterized in that the synthetic gas obtained is used for heating the conduit and the high-temperature reactor, for clarifying the melt and for operating an oxygen plant by means of gas motors or gas turbines.

## Revendications

1. Procédé de valorisation de toutes sortes de déchets par lequel des déchets industriels, domestiques et/ou spéciaux ainsi que des épaves de marchandises industrielles non triés, non traités et contenant des polluants quelconques sous forme liquide ou solide, sont soumis à une température élevée et une séparation ou une transformation thermique, et par lequel les résidus solides produits sont transformés à l'état de masse fondue de température élevée par utilisation maximale de l'énergie, caractérisé en ce que les déchets non broyés éventuellement concassés de manière grossière, sont comprimés en paquets compacts de façon discontinue, ensemble avec les parties liquides présentes et avec conservation de leur structure de mélange et de leur état lié, et, sont amenés dans une conduite chauffée au-dessus de 100°C en maintenant la pression en leur conférant la forme de la conduite, en ce que la matière compacte est maintenue, en poussant, en contact avec les parois de la conduite de manière à compenser les forces pendant le temps nécessaire à l'évaporation du liquide initialement présent, à l'annulation des forces de rappel mécaniques inhérentes propres de composants de déchet et jusqu'à ce que les constituants organiques entraînés jouent, au moins partiellement, le rôle de liants, et en ce que le conglomérat solide en forme de blocs comprimés éjecté du canal dans cet état et présentant une stabilité de forme ou de structure, est introduit dans un réacteur à haute température dont la totalité du volume est maintenue à une température d'au moins 1000°C, et en ce qu'à partir des blocs solides à l'intérieur du réacteur à haute température, un amas perméable au gaz est formé jusqu'à la hauteur de l'ouverture d'entrée de la conduite chauffée, et est maintenu, tandis que la hauteur du niveau de l'amas solide à lit fixe est maintenu constante de telle sorte que les constituants organiques des blocs solides soient aussitôt décomposés par pyrolyse immédiatement après avoir quitté la conduite, au moins à leur périphérie, et en ce que la vapeur d'eau sortant avec une pression élevée de la conduite et provenant du traitement thermique, dans la conduite chauffée, des parties liquides entraînées des déchets est amenée au-dessus de la surface de l'amas solide à travers le lit fluidifié contenant du carbone provenant de la surface de l'amas des zones périphériques des blocs de carbone décomposés thermiquement et carbonisés (réaction de la vapeur d'eau).

2. Procédé selon la revendication 1, caractérisé en ce qu'on minimise l'espace vide initialement présent par le compactage discontinu des déchets et une liaison mécaniquement stable en force et en forme des constituants solides s'effectue.

3. Procédé selon la revendication 1, caractérisé en ce que le conglomérat solide compacté de façon à présenter une structure stable, séché, sortant par blocs de la conduite chauffée, et libéré des constituants liquides faiblement volatiles, est directement et immédiatement introduit dans le réacteur à haute température.

4. Procédé selon les revendications 1 à 3, caractérisé en ce que les parties carbonées dans l'amas solide à lit fixe sont gazéifiées sous forme de dioxyde de carbone par addition d'une quantité dosée d'oxygène de telle sorte que le dioxyde de carbone soit transformé en monoxyde de carbone en traversant l'amas solide à lit fixe contenant du carbone (réaction de Boudouard).

5. Procédé selon les revendications 1 à 4, caractérisé en ce que dans une zone de stabilisation à une température d'au moins 1000°C, située au-dessus du lit fluidifié, tous les composés hydrocarbonés chlorés (dioxine et furane) sont décomposés, et en ce que l'on réalise le craquage des constituants hydrocarbonés à longue chaîne provenant de la décomposition thermique des constituants organiques en empêchant la formation de condensats du type des huiles et des goudrons.

6. Procédé selon les revendications 1 à 5, caractérisé en ce que le mélange gazeux de synthèse chargé de polluants et à une température d'au moins 1000°C est refroidi de façon ultra-rapide par admission d'eau (à l'exclusion de toute nouvelle synthèse de dioxine et de furane) jusqu'à une température en-dessous de 100°C immédiatement après avoir quitté le réacteur à haute température, et est dépoussiéré.

7. Procédé selon les revendications 1 à 6, caractérisé en ce que les constituants métalliques et minéraux provenant de la gazéification du carbone par l'oxygène sont fondus à des températures supérieures à 2000°C et en ce que les liquides alors présents sont retirés, éventuellement par mise en oeuvre de procédés connus de séparation, et fractionnés.

8. Procédé selon les revendications 1 à 7, caractérisé en ce que l'on laisse la masse en fusion à haute température après la gazéification à haute température, pour la plupart de nature minérale, dans une atmosphère oxydante à l'état liquide, jusqu'à obtenir une masse en fusion comparable dans sa composition au produit naturel, complètement épurée, sans soufflures et homogène.

9. Procédé selon les revendications 1 à 8, caractérisé en ce que l'on produit des produits industriels à haute valeur à partir de la masse en fusion homogène à haute température par utilisation d'au moins une partie considérable de son énergie intrinsèque par mise en oeuvre de procédés de coulée, de filage, de formage, de démoulage et de gonflage.

10. Procédé selon les revendications 1 à 9, caractérisé en ce que le gaz de synthèse obtenu est utilisé pour le chauffage de la conduite et du réacteur à haute température, pour l'épuration de la masse en fusion et pour l'exploitation d'une installation à oxygène par des moteurs à gaz et des turbines à gaz.
